# EUROPÄISCHE PATENTSCHRIFT

(11) **EP 3 415 216 B1**
(45) Veröffentlichungstag und Bekanntmachung des Hinweises auf die Patenterteilung: **07.08.2024**
(21) Anmeldenummer: 18175922.6
(22) Anmeldetag: 05.06.2018
(51) Int. Cl.: B01D 46/10, F24C 15/20

(54) **FILTERELEMENT FÜR DUNSTABZUGSHAUBE**
FILTER ELEMENT FOR AN EXTRACTOR HOOD
ÉLÉMENT FILTRANT POUR HOTTE ASPIRANTE

(30) Priorität: 13.06.2017 DE 202017003105 U
(43) Veröffentlichungstag der Anmeldung: 19.12.2018
(73) Patentinhaber: BSH Hausgeräte GmbH, 81739 München (DE)
(72) Erfinder: Herbst, Jens, 75015 Bretten (DE); Ollendorff, Katharina, 76131 Karlsruhe (DE)

(56) Entgegenhaltungen:
- EP-A1- 1 426 091
- EP-A1- 3 216 508
- WO-A1-2013/043124
- DE-A1- 102011 110 455
- DE-A1- 2 509 674
- GB-A- 1 383 384
- US-B1- 6 293 983

## Beschreibung

Die vorliegende Erfindung betrifft ein Filterelement für eine Dunstabzugshaube.

Bei Dunstabzugshauben werden Filterelemente, insbesondere Filterkassetten, verwendet, um aus dem Wrasen, der durch die Dunstabzugshaube angesaugt wird, Verunreinigungen, insbesondere Fettpartikel abzuscheiden. Diese Filterelemente werden daher auch als Fettfilter bezeichnet.

DE 25 09 674 A1 beschreibt einen Fettfilter, insbesondere für Dunstabzugshauben über Kochherden, in Gestalt eines plattenförmigen Faservlieses, wobei dieses aus einem Gemisch von synthetischen Fasern und hydrophilen Fasern besteht, wobei die Fasern an ihren Kreuzungspunkten durch ein nichtfilmbildendes Bindemittel verbunden sind.

US 6,293,983 B1 beschreibt eine Filteranordnung für die Verwendung in einer Luftfiltereinheit, insbesondere zum Filtern von Kochdünsten. Die Anordnung umfasst einen Filter, der sich über den Luftstrom erstreckt und einen Fettvorfilter, der stromaufwärts von dem Filter angeordnet ist. Der Fettvorfilter ist prinzipiell aus Wollfasern hergestellt (siehe Zusammenfassung der D6). Die Wollfasern können gewebt, ungewebt oder gefilzt sein.

GB 1 383 384 A offenbart eine Gasfiltrationsvorrichtung zum Reinigen von Gas und zum Entfernen von Verunreinigungen daraus, wobei die Vorrichtung eine Leitung und einen darin angeordneten Filter umfasst.

EP 1 426 091 A1 beschreibt einen Feinstfiltereinsatz zum Abscheiden feinst verteilter Tröpfchen aus Aerosolen. Der Feinstfiltereinsatz hat einen Filterrahmen, in dem mehrere Lagen eines Filtergestricks gehalten sind. Das Filtergestrick ist ausschließlich aus Kunststofffasersträngen gestrickt. Als eine Halteeinrichtung, die den Ein- und Austrittsbereich des Feinstfilterseinsatzes definiert, kann ein grobmaschiges Drahtgeflecht verwendet werden.

DE 10 2011 110 455 A1 offenbart ein Filterelement einer Dunstabzugshaube mit einem mattenartigen Filtermedium. Das Filtermedium kann aus einer Kunststoffschaummatte oder aus Polyestervlies aufgebaut sein. Das Filtermedium kann sichtseitig oder beidseitig durch eine Deckschicht abgedeckt sein, die ein Lochblech oder eine Lage Streckmetall sein kann.

Die frühere Anmeldung EP 3 216 508 A1 offenbart ein Filterelement für eine Dunstabzugshaube. Das Filterelement weist zumindest eine Filterlage auf, die aus einem Kunststoffmaterial besteht und in der Filterlage die Öffnungen aufweist, deren Größe fixiert ist.

WO 2013/043124 A1 offenbart einen Mehrlagenfilter. Der Filter wird beispielsweise zum Isolieren von Krankheitserregern in Wasser, zur Blutfiltration, Zellzucht und dem Entfernen von ungewünschten Partikeln von Lebensmitteln und industriellen Fluiden aus Flüssigkeiten, Luft oder einer Mischung aus Flüssigkeit und Gas. Der Filter kann beispielsweise auch zur Filtration von Lösungen verwendet werden, wobei Milch oder Öl ausgefiltert werden können.

Im Stand der Technik sind Streckmetallfilter bekannt, welche in mehreren Lagen hintereinander angeordnet sind.

Beispielsweise offenbart die DE 10 2014 209 953 A1 eine Filteranordnung für eine Dunstabzugshaube sowie eine Dunstabzugshaube mit einer solchen Filteranordnung. Die Filteranordnung für eine Dunstabzugshaube weist mindestens eine Filtervorrichtung mit mindestens einem Filterelement auf. Als Filterelement wird ein Element der Filtervorrichtung bezeichnet, das zumindest bereichsweise aus einem Filtermaterial besteht. Als Filtermaterial werden Streckmetallfilterlagen beschrieben, die gegebenenfalls in einem Elementrahmen gehalten sind.

Die Streckmetalllagen weisen große Öffnungen auf, um den Druckverlust pro Lage zu minimieren. Aufgrund des Herstellungsprozesses, in welchem das Metall angeritzt wird, um dann gestreckt zu werden ergeben sich enorm raue Kanten. Aufgrund dieser Fertigungsmethode ist der Druckverlust trotz der großen Öffnungen, die Maschen darstellen, hoch, wobei die Filtereffizienz wegen der großen Maschen gleichzeitig niedrig ist. Dies liegt daran, dass die einzelnen Maschen zu weit für feinere Partikel sind. Optimaler Weise versperren diese Filterebenen sich gegenseitig, so dass die statistische Wahrscheinlichkeit für einzelne Partikel eine der Streckmetalllagen zu treffen steigt. Dieser Effekt kann durch Sichtblenden verstärkt werden. Dabei steigt die Geschwindigkeit der Luft durch die Versperrungswirkung der Blende an und die Trägheitseffekte werden entsprechend der höheren Geschwindigkeiten dominanter. Nachteil ist ein wesentlich erhöhter Druckverlust, welcher sich negativ auf den Energieverbrauch beziehungsweise allgemein auf die Leistungsfähigkeit des Dunstabzuges auswirkt. Vor allem in Geräten niedriger Leistungsklasse wirkt sich dies negativ auf den Fördervolumenstrom und damit auf die Wrasenfangrate aus. Um Filtereffizienzsteigerungen zu erreichen werden bei Streckmetallfiltern Prinzip bedingt mehr Lagen eingesetzt, was zusätzlich zu den physikalischen Auswirkungen, die Stückkosten und das Gewicht pro Filter signifikant erhöht.

Aufgabe der vorliegenden Erfindung ist es daher die Nachteile des Standes der Technik zu überwinden. Insbesondere soll ein Filterelement bereitgestellt werden, bei dem der Fettanteil des Wrasens auf zuverlässige Weise reduziert und somit die Fettfilterleistung verbessert werden kann und dennoch der Druckverlust minimiert wird.

Gemäß der Erfindung wird die Aufgabe gelöst durch ein Filterelement für eine Dunstabzugshaube gemäß Anspruch 1.

Das Filterelement wird im Folgenden auch als Filtereinheit, Filterkassette oder Fettfilter bezeichnet. Das Filterelement stellt vorzugsweise ein Filterelement dar, das an einer Ansaugöffnung einer Dunstabzugshaube lösbar befestigt werden kann. Das Filterelement kann dabei in einen Rahmen aufgenommen sein und über diesen an der Ansaugöffnung befestigt sein. Besonders bevorzugt stellt das Filterelement ein Element zum Ausfiltern von Partikeln insbesondere von Fett- oder Ölpartikeln aus Dünsten und Wrasen dar.

Das Filterelement weist erfindungsgemäß eine Filtermatte mit zumindest einer Filterlage auf. Als Fiterlage wird hierbei eine Lage bezeichnet, die zumindest aus einer Schicht von Filtermaterial besteht und die in dem Filterelement angeordnet ist und von anströmendem Wrasen durchströmt wird. Eine der Oberflächen der Filterlage kann daher auch als Anströmfläche und die gegenüberliegende Oberfläche als Abströmfläche bezeichnet werden. Allerdings können erfindungsgemäß auch mehr als eine Filterlage in dem Filterelement angeordnet sein. Wenn das Filterelement mehr als eine Filterlage aufweist, liegen diese in dem Filterelement aufeinander, das heißt sie sind gestapelt und werden nacheinander von anströmenden Wrasen durchströmt. Die Filterlage liegt als separates Element vor dem Zusammenbau des Filterelementes vor.

Das Filterelement ist dadurch gekennzeichnet, das die zumindest eine Filterlage aus einem Kunststoffmaterial besteht. Als Kunststoffmaterial wird im Sinne der Erfindung geformter Kunststoff bezeichnet. Kunststoff ist aus Werkstoffen ausgebildet, die hauptsächlich aus Makromolekülen bestehen. Die jeweiligen Makromoleküle eines Kunststoffes sind Polymere und daher aus sich wiederholenden Grundeinheiten aufgebaut. Die Polymere können aus Naturstoffen oder rein synthetisch sein. Beispielsweise kann als Kunststoffmaterial Polyester, Polypropylen oder ähnliches verwendet werden.

Erfindungsgemäß weist die Filterlage Öffnungen auf, die in ihrer Größe fixiert sind. Als Öffnung wird die Durchlassöffnung beziehungsweise der Zwischenraum zwischen Filterstegen, die aus Kunststoffmaterial bestehen, in der jeweiligen Filterlage bezeichnet. Die Filterstege werden im Folgenden auch als Stege bezeichnet. Die Öffnungen bestimmen sich durch den Filterstegabstand. Im Sinne der Erfindung werden die Öffnungen auch als Löcher oder Maschen bezeichnet. Durch die Öffnungen in der Filterlage kann der anströmende Wrasen hindurch strömen. Als Öffnungen, die in ihrer Größe fixiert sind, werden Öffnungen bezeichnet, die in ihrer Größe nicht veränderbar sind, das heißt die Filterstege zwischen den Öffnungen können nicht verschoben werden. Somit weisen die Öffnungen einer Filterlage dauerhaft die gleiche Größe auf und die Größe der Öffnungen wird bei der Herstellung einer Filterlage vorbestimmt. Vorzugsweise sind die Öffnungen einer Filterlage gleich groß. Besonders bevorzugt sind die Öffnungen der Filterlage fein beziehungsweise klein gegenüber den Maschen aus dem Stand der Technik bekannten Streckmetalllagen.

Weiterhin ist die Filtermatte erfindungsgemäß durch jeweils eine im Wesentlichen flächenparallel zur Filtermatte und in Luftdurchströmrichtung vor und hinter der Filtermatte angeordnete Decklage eingefasst, welche zumindest teilweise luftdurchlässig sind. Es ist somit eine Decklage an der Anströmfläche und eine Decklage an der Abströmfläche der Filtermatte vorgesehen. Die Decklagen können sowohl gleichartig wie die übrigen Filterlagen aufgebaut sein, als auch optisch und funktional unterschiedlich sein. Zentrale Funktionen der Decklagen sind der mechanische Schutz der anfälligen Kunststofffilterinnenlagen und die optische Aufwertung des Gesamtfilters. Die Decklagen sollen hierbei ausreichend luftdurchlässig sein, um einen geringen Druckverlust zu erreichen.

Die Verwendung von Filterlagen, die aus Kunststoffmaterial bestehen, weist eine Reihe von Vorteilen auf. Die Herstellung von Streckmetall mit erfindungsgemäß ähnlicher Feinheit der Öffnungen ist kostenintensiv und nur durch Verfahren wie Stanzen, Laserschneiden oder ähnlichen Verfahren arbeitsintensiv, aufwendig und mit erheblichen Materialverlusten möglich. Demgegenüber ist die Herstellung einer Filterlage die aus einem Kunststoffmaterial besteht vereinfacht, schneller und kostengünstiger.

Des Weiteren können durch die Verwendung eines Kunststoffmaterials in einer Filterlage, die in der Filterlage gebildeten Öffnungen kleiner beziehungsweise feiner gegenüber den großen Öffnungen beziehungsweise Maschen der aus dem Stand der Technik bekannten Streckmetallfilterlagen sein. Somit kann auch insgesamt die Anzahl der Öffnungen einer erfindungsgemäßen Filterlage gegenüber einer Streckmetalllage erhöht werden. Weiterhin vorteilhaft ist, dass bei Verwendung von Kunststoff gleichmäßige Stege zwischen den Öffnungen möglich sind. Somit sind raue Kanten, die bei Streckmetalllagen entstehen, nicht zu befürchten und der Druckverlust aufgrund von Verwirbelungen kann dadurch verringert werden. Zudem kann durch die Möglichkeit bei der Verwendung von Kunststoff schmale Stege herzustellen, der Flächenanteil der Öffnungen in der Fläche der Filterlage vergrößert werden. Die Versperrung, die durch die Stege entsteht, liegt erfindungsgemäß daher bei <50% der Fläche der Filterlage liegen. Durch die schmalen und gleichmäßigen Stege kommt es zudem zu vielen kleinen Umlenkungen des Wrasens innerhalb einer erfindungsgemäßen Filterlage gegenüber wenigen großen Umlenkungen in einem Streckmetallfilter. Hierdurch kann der Druckverslust am Filterelement gering gehalten werden. Weiterhin wird der induzierte Turbulenzgrad der Strömung durch die Filterlage eines erfindungsgemäßen Filterelements reduziert. Zudem ist außerdem vorteilhaft, dass durch die kleineren Öffnungen effektiv mehr Wrasen nahe an den Filterstegen vorbei geführt wird und somit die Wahrscheinlichkeit der mechanischen beziehungsweise physikalischen Abscheidung, vor allem für größere Partikel wächst, wodurch die Filterleistung eines Filterelements insgesamt gesteigert werden kann.

Ein weiterer Vorteil der Verwendung von Kunststoffmaterial als Fiterlage liegt in der chemischen Beständigkeit gegen Reinigungsmitteln, wie sie in Spülmaschinen benutzt werden. Somit ist das erfindungsgemäße Filterelement beständiger gegenüber Korrosionsschäden, als die aus dem Stand der Technik bekannten Streckmetallfilter, sofern diese nicht in einem separatem Bearbeitungsschritt Oberflächentechnisch bearbeitet wurden, bspw. durch Eloxal-Verfahren. Diese Nachbehandlung von Streckmetall ist mit weiterem Aufwand und Kosten verbunden.

Ein Vorteil der erfindungsgemäßen Decklagen ist die erhöhte Stabilität des Filterelements. Zudem wird durch die Decklagen ein Schutz der anfälligen Kunststoffinnenlagen vor mechanischer Beanspruchung erreicht. Weiterhin erhält das Filterelement durch die Decklagen eine ansprechendere und hochwertigere optische Ausgestaltung.

Gemäß einer bevorzugten Ausgestaltung der vorliegenden Erfindung ist das Filterelement über einen umlaufenden Rahmen eingefasst. Auf diese Weise sind alle Filterlagen samt den Decklagen sicher über einen Rahmen eingefasst. Dies hat den Vorteil, dass das Filterelement leichter handhabbar ist, wenn es beispielsweise zur Reinigungszwecken aus der Dunstabzugshaube entnommen werden soll.

Gemäß einer besonders bevorzugten Ausführungsform der vorliegenden Erfindung, sind die Decklagen zur mechanischen Stabilisierung der Filtermatte ausgebildet. Somit wird in vorteilhafter Weise ein Schutz gegen Verformung und/oder Ausbeulen der Filterlagen aus Kunststoff erreicht. Die Decklagen sind erfindungsgemäß aus einem Metall gebildet und sind beispielsweise als Streckmetall, Lochblech, Metallvlies oder Metallgewebe ausgebildet.

Erfindungsgemäß besteht die zumindest eine Filterlage aus zumindest zwei Schichten und die Schichten sind jeweils aus Kunststoffprofilen ausgebildet. Als Schicht wird im Sinne der Erfindung ein Element bezeichnet, aus dem eine Filterlage zumindest teilweise ausgebildet ist und welche aus einem Kunststoffmaterial besteht. Gemäß einer Ausführungsform weist eine Filterlage zumindest zwei Schichten auf, die in der Filterlage aufeinander liegen, das heißt gestapelt sind und die nacheinander von anströmende Wrasen durchströmt werden. Die Schichten können vor dem Zusammenbau der Filterlage als separate Elemente vorliegen.

Erfindungsgemäß sind die Schichten einer Filterlage aus Kunststoffprofilen gebildet. Im Sinne der Erfindung ist ein Profil ein langes dünnes Element, welches flexibel oder starr ist. Das Profil kann in seiner Länge abhängig von der Größe der zu verwendenden Schicht auf einfache Weise begrenzt werden. Der Querschnitt des Kunststoffprofils kann beispielweise kreisförmig, oval, flach oder vier- oder mehreckig sein. Eine Schicht einer Filterlage kann mehrere Kunststoffprofile aufweisen, das heißt, dass die Schicht nicht aus einem einzigen Kunststoffprofil bestehen muss.

Vorteilhaft an dieser Ausgestaltung ist, dass durch die Anordnung zumindest zweier Schichten in einer Filterlage durch die Ausrichtung der Kunststoffprofile der einzelnen Schichten Öffnungen ausgebildet werden können, durch die der anströmende Wrasen hindurchtreten sowie umgeleitet werden kann. Die Filterstege werden somit bei dieser Ausführungsform durch Teile der Kunststoffprofile der einzelnen Schichten gebildet. Insbesondere wird der anströmende Wrasen durch die Kunststoffprofile umgeleitet und die Chance erhöht, dass Partikel an den Filterstegen abgeschieden werden. Zudem können in einer Filterlage, die aus zumindest zwei Schichten besteht, gegenüber einer Filterlage, die aus nur einer Schicht besteht, mehr Partikel abgeschieden werden. Somit wird die Filterleistung insgesamt verbessert. Weiterhin vorteilhaft ist, dass durch die Verwendung von Kunststoffprofilen in der Herstellung der einzelnen Schichten einer Filterlage die Luftdurchlässigkeit der Filterlage durch die zwischen den Kunststoffprofilen in einer Schicht eingestellten Abstände senkrecht zur Anströmrichtung auf einfache Weise auf definierte Werte eingestellt werden kann und somit die fixierte Größe der Öffnungen der Filterlage bereits im Herstellungsprozess je nach Anforderung des Filterelementes festgelegt werden kann. Zudem kann die Verteilung der Luftdurchlässigkeit über die Fläche der Schichten in einer Filterlage geleichmäßig eingestellt werden, da lediglich das Kunststoffmaterial selbst, das heißt die Kunststoffprofile die Luft beziehungsweise den Wrasen an einem Durchströmen durch die Filterlage hindern.

Erfindungsgemäß ist innerhalb einer Filterlage die Ausrichtung der Kunststoffprofile der einen Schicht unterschiedlich zu der Ausrichtung der Kunststoffprofile der anderen Schicht. Vorzugsweise sind bei dieser Ausführungsform die Kunststoffprofile in den einzelnen Schichten jeweils parallel zueinander angeordnet. Dies bedeutet, dass die jeweiligen Enden der Kunststoffprofile in einer Schicht nebeneinander angeordnet sind. Es werden jeweils die Schichten betrachtet, die übereinander liegenbeziehungsweise gestapelt sind. Die beiden Schichten, deren Ausrichtung unterschiedlich ist, können daher auch als benachbarte Schichten bezeichnet werden. Vorzugsweise sind die Kunststoffprofile einer Schicht über Kreuz auf den Kunststoffprofilen einer zweiten Schicht angeordnet. Als über Kreuz wird hierbei ein Anordnen der Kunststoffprofile bezeichnet, bei dem in senkrechter Draufsicht auf eine Filterlage zumindest ein Teil der Kunststoffprofile der einen Schicht durch zumindest einen Teil der Kunststoffprofile der anderen Schicht verdeckt wird. Die Kunststoffprofile der beiden Schichten stehen dabei vorzugsweise in einem Winkel, der größer Null und ungleich 180° ist. Vorzugsweise sind die Kunststoffprofile der einen Schicht in einem rechten Winkel zu den Kunststoffprofilen einer anderen Schicht ausgerichtet. Durch diese Ausgestaltung der Filterlagen kann die Größe der Öffnungen einer Filterlage durch die Anordnung, Anzahl und der Größe des Querschnitts der Kunststoffprofile festgelegt beziehungsweise bestimmt werden.

Bei der Erfindung, bei der die Schichten durch Kunststoffprofile gebildet werden und in einer Filterlage die Ausrichtung der Kunststoffprofile der einen Schicht unterschiedlich zu der Ausrichtung der Kunststoffprofile der anderen Schicht ist, kann die Filterlage durch Kalandrieren hergestellt werden und hierdurch eine feste Schichtstruktur geschaffen werden. Hierbei werden zwei gegenläufig rotierende Walzen verwendet, in welchen jeweils eine Schichtstruktur als Negativ eingebracht ist. Hierbei kann die Schichtstruktur, wie etwa Stegabstand und Versatzwinkel der Schichten durch die Kalandrierwalzen exakt eingestellt werden.

Vorteilhaft an dieser Ausführungsform ist, dass durch die Anordnung der Kunststoffprofile zweier Schichten zueinander, ein Vielzahl von kleinen Öffnungen ausgebildet werden können, die durch gleichmäßige und schmale Stege begrenzt sind, welche aus den über Kreuz angeordneten Kunststoffprofilen zweier Schichten ausgebildet werden. Durch die schmalen und gleichmäßigen Stege können Versperrungen von unter 50% der Fläche der Filterlage erreicht werden. Zudem wird der Wrasen durch die vielen schmalen Stege häufig umgelenkt, wodurch der Druckverlust an der Filterlage gering gehalten wird. Zudem wird durch diese Ausgestaltung auch das Abscheidungsvermögen für die Abscheidung von Verunreinigungen an der Filterlage verbessert, da die Dünste und Wrasen beim Durchströmen der Filterlage einen Richtungswechsel ausführen und dadurch die Abscheidung von Verunreinigung an dem Kunststoffmaterial unterstützt wird. Somit kann die Filterleistung des Filterelements insgesamt verbessert werden. Weiterhin vorteilhaft ist, dass durch die Ausgestaltung der Schichten in einer Filterlage, die Filterlage eine ausreichende Stabilität aufweist. Schließlich weist diese Ausführungsform der Filterlage den Vorteil auf, dass die Filterlage als Endloslage hergestellt werden kann und die Filterlage für einzelne Filterelemente aus dieser Endloslage ausgeschnitten oder ausgestanzt werden können. Eine solche Endloslage ist bei der Verwendung von feinem Streckmetall, das nur schwer hergestellt werden kann, nicht oder nur schwer möglich.

In einer besonders bevorzugten Ausführungsform des erfindungsgemäßen Filterelementes sind die Filterlagen innerhalb des Filterelementes verdreht zueinander angeordnet. Im Sinne der Erfindung bezeichnet verdreht zueinander, dass die Filterstege der Filterlagen in einem bestimmten Winkel zueinander ausgerichtet sind. Vorzugsweise liegt dieser Winkel zwischen 20 bis 70°. Die Filterlagen können beispielsweise um einen Winkel von 45° zueinander verdreht sein. Vorteilhaft an dieser Ausgestaltung ist, dass die Filtereffizienz durch eine statistisch bessere Verdeckung der Öffnungen der einen Filterlage durch Filterstege der weiteren Filterlage weiter erhöht werden kann. Insbesondere ist in senkrechter Draufsicht auf die aufeinander liegenden Filterlagen zumindest ein Teil der Öffnungen der einen Filterlage durch die Filterstege der weiteren Filterlage verdeckt.

Die Erfindung wird im Folgenden erneut unter Bezugnahme auf die beiliegenden Zeichnungen beschrieben. Es zeigen:
- Figur 1:: eine schematische, perspektivische Unteransicht auf eine Dunstabzugshaube mit Filterelementen gemäß einer Ausführungsform der vorliegenden Erfindung;
- Figur 2:: eine schematische Ansicht eines ersten Ausführungsbeispiels einer Filterlage eines erfindungsgemäßen Filterelements;
- Figur 3:: eine schematische Ansicht eines zweiten Ausführungsbeispiels einer Filterlage eines erfindungsgemäßen Filterelements;
- Figur 4:: eine schematische Ansicht eines dritten Ausführungsbeispiels einer Filterlage eines erfindungsgemäßen Filterelements;
- Figur 5:: eine schematische Ansicht der Ausrichtung von vier Filterlagen zueinander; und
- Figur 6:: eine schematische Ansicht des Aufbaus eines erfindungsgemäßen Filterelements.

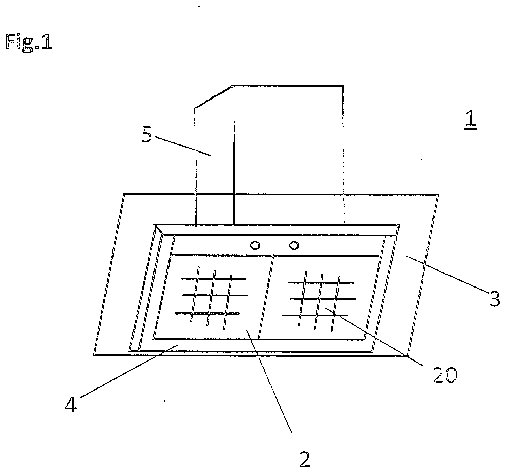

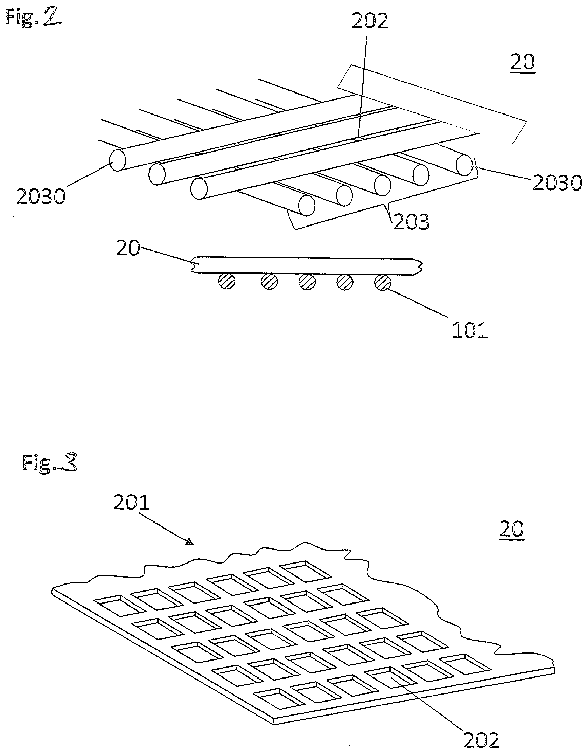

In Figur 1 ist eine schematische Unteransicht einer Dunstabzugshaube 1 gezeigt. Die Dunstabzugshaube 1 stellt eine sogenannte Schrägesse dar. Diese besteht aus einem Kamin 5 und einem sich unterhalb des Kamins 5 erstreckenden Wrasenschirms 3. Der Wrasenschirm 3 steht zu der Horizontalen verschwenkt nach oben. In dem Wrasenschirm 3 ist eine Ansaugöffnung 4 vorgesehen, in der in der dargestellten Ausführungsform zwei Filterelemente 2 in Form von Filterkassetten eingebracht sind. Der Wrasen strömt die Dunstabzugshaube 1 von unten an und gelangt so zu den Filterelementen 2 und tritt in diese ein. Die in Figur 1 sichtbare Seite der Filterelemente 2 wird daher als Anströmseite bezeichnet. Mögliche Ausführungsformen der Filterelemente 2 sind in den Figuren 3 bis 5 gezeigt.

Figur 2 zeigt eine erste Ausführungsform einer Filterlage 20 des erfindungsgemäßen Filterelements 2. Das Filterelement 2 kann aus mehreren Filterlagen 20 aufgebaut sein. Die Filterlage 20 besteht aus Kunststoffmaterial. Die Filterlage 20 ist in dieser Ausführungsform aus zwei Schichten 203 aufgebaut. Die Schichten 203 sind jeweils aus Kunststoffprofilen 2030 gebildet. Die Anzahl der Kunststoffprofile 2030 einer Schicht 203 kann je nach Anforderungen des Filterelementes 2 angepasst werden, sowie der Abstand zwischen den Kunststoffprofilen 2030. In dieser Ausführungsform weisen die Kunststoffprofile 2030 einen kreisförmigen Querschnitt auf. Der Querschnitt kann aber auch oval, flach oder vier- oder mehreckig sein. Zudem kann die Stärke der Kunststoffprofile 2030 je nach Anforderung angepasst werden. Die Kunststoffprofile 2030 sind in einer Schicht 203 parallel zueinander in einem definierten Abstand zueinander angeordnet. Auf Grund des Abstandes der Kunststoffprofile 2030 zueinander entstehen Zwischenräume zwischen den Kunststoffprofilen 2030, durch die der anströmende Wrasen durchtreten kann.

Zudem ist die Ausrichtung der Kunststoffprofile 2030 einer Schicht 203 unterschiedlich zur Ausrichtung der Kunststoffprofile 2030 einer anderen Schicht 203. Vorzugsweise liegen diese Schichten 203 übereinander. Insbesondere sind die Kunststoffprofile 2030 der einen Schicht 203 in einem rechten Winkel zu den Kunststoffprofilen 2030 einer anderen Schicht 203 ausgerichtet. Vorzugsweise überdecken somit die Kunststoffprofile 2030 der einen Schicht 203 teilweise die Kunststoffprofile 2030 der anderen Schicht 203. Durch die Anordnung der Kunststoffprofile 2030 der jeweiligen Schicht 203 zu den Kunststoffprofilen 2030 der anderen Schicht 203 entstehen zwischen den Kunststoffprofilen 2030 der beiden Schichten 203 Öffnungen 202 in der Filterlage 20, durch die der anströmende Wrasen hindurchtreten kann. An den Kontaktstellen, an denen die Kunststoffprofile 2030 der beiden Schichten 203 aneinander anliegen, sind diese miteinander verbunden. Insbesondere können die Kunststoffprofile 2030 dort miteinander verklebt oder verschmolzen sein.

Die zumindest zwei Schichten 203 sind somit unlösbar miteinander verbunden. Daher sind die Öffnungen 202 in ihrer Größe fixiert, das heißt, dass sich die Größe der Öffnungen 202 nicht verändern kann. Somit kann die Größe der Öffnungen 202 bereits beim Herstellen der Filterlage 20 je nach Anforderungen festgelegt werden und nicht mehr beispielwese während des Einbaus des Filterelements 2 in eine Dunstabzugshaube versehentlich verändert werden oder durch die Anlagerung von Verunreinigungen und den Durchtritt von Partikeln verändert werden.

Neben der Fettfiltration, welche auf Basis der Trägheits- und Diffusionsabscheidung ein statistisch physikalischer Vorgang ist, müssen die Filter das Fett bis zum nächsten Reinigungsvorgang durch den Kunden binden. Zur Verdeutlichung dessen, ist in Figur 3 ein Teilbereich der Filterlage 20 der Ausführungsform der Figur 3 dargestellt. Idealerweise weißt die Filterlage 20 einige enge Kontaktflächen mit kleinen Radien auf, in denen sich Fettpartikel 101 aufgrund der Kapillarität stärker sammeln und dort anhaften. Der kleine Radius und die Menge der Kontaktflächen (dargestellt durch die Pfeile) wird durch die Größe der Öffnungen 202, die Stegbreite, das heißt die Stärke der Kunststoffprofile und die Anordnung der Schichten 203 definiert.

In der Figur 3 wird eine zweite Ausführungsform einer Filterlage eines erfindungsgemäßen Filterelementes gezeigt. In dieser Ausführungsform besteht das Filterelement aus einer Filterlage 20, die aus lediglich einer Schicht, die aus Kunststoffmaterial 201 ausgebildet ist, besteht. Das Filterelement, kann aus mehreren Filterlagen 20 bestehen. In der vorliegenden Ausführungsform ist die Filterlage 20 als eine ebene Platte ausgebildet, in welche Öffnungen 202 mit einer fixierten Größe eingebracht sind. Die Öffnungen 202 weisen jeweils 4 Filterstege auf über die sie mit anderen Öffnungen 202 verbunden sind, wobei diese Stege aus Kunststoffmaterial 201 ausgebildet sind. Diese Ausführungsform der Filterlage stellt daher eine Kunststoffplatte mit eingebrachten Öffnungen 202 dar.

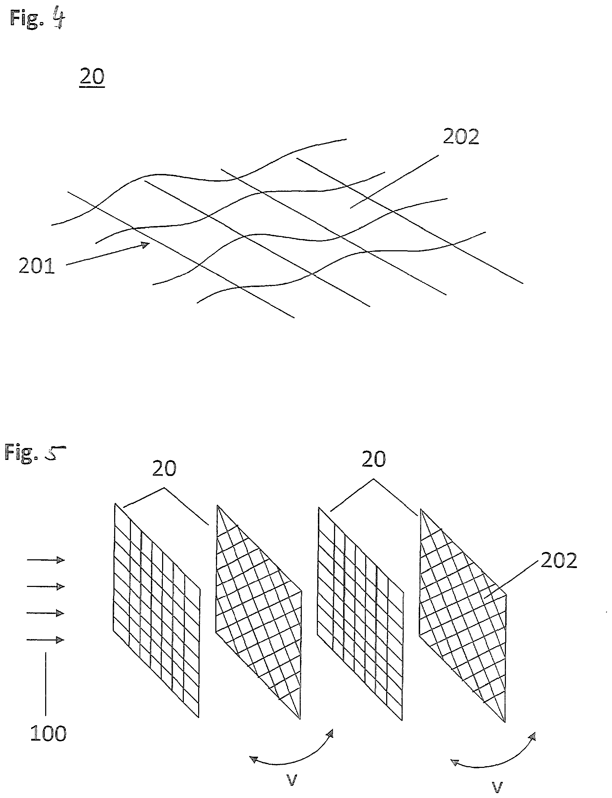

Figur 4 zeigt eine dritte Ausführungsform einer Filterlage 20 eines erfindungsgemäßen Filterelementes. In dieser Ausführungsform ist das Kunststoffmaterial 201 gewebt. Durch den Aufbau dieser Filterlage 20 entstehen auch Öffnungen 202 zwischen dem Kunststoffmaterial 201, insbesondere handelt es sich in dieser Ausführungsform bei den Öffnungen 201 um Maschen.

In der Figur 5 ist ein Filterelement 2 gezeigt, welches aus mehreren Filterlagen 20 aufgebaut ist. Zur Vereinfachung der Darstellung ist in dieser Ausführungsform das Filterelement 2 aus vier Filterlagen 20 aufgebaut. Die Anzahl der Filterlagen 20 ist erfindungsgemäß jedoch nicht auf eine bestimmte Anzahl begrenzt. Die einzelnen Filterlagen 20 sind in dieser Ausführungsform verdreht (v) zueinander ausgerichtet. Vorzugsweise sind die Filterlagen 20 in einem Winkel zwischen 20 bis 70° verdreht zueinander angeordnet. In der dargestellten Ausführungsform sind die Filterlagen 20 von links nach rechts betrachtet, insbesondere, wenn der anströmende Wrasen 100 von links nach rechts durch die einzelnen Filterlagen 20 strömt, in den Winken 0° - 45° - 0° - 45° ausgerichtet.

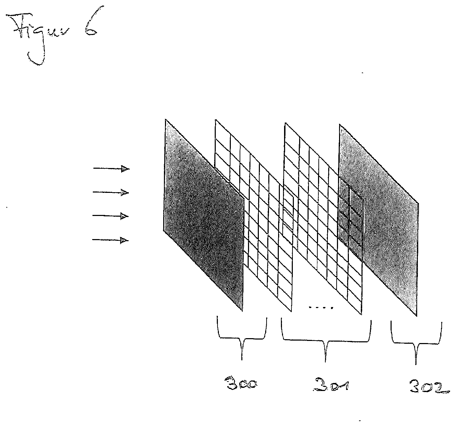

Figur 6 zeigt in einer schematischen Darstellung einen Aufbau des erfindungsgemäßen Filterelements. Das Filterelement umfasst eine -in Luftdurchströmrichtung gesehenvordere Decklage 300 und eine hintere Decklage 302. Die Decklagen 300, 302 sind in diesem Ausführungsbeispiel als Streckmetalllagen ausgeführt. Die Filtermatte 301 ist zwischen den Decklagen angeordnet und aus einer Anzahl von Filterlagen 20 aus Kunststoff aufgebaut. Im zusammengebauten Zustand kann das gesamte Filterelement durch einen hier nicht dargestellten Rahmen eingefasst sein.

### Bezugszeichenliste

- 1: Dunstabzugshaube
- 2: Filterelement
- 3: Wrasenschirm
- 4: Ansaugöffnung
- 5: Kamin

- 20: Filterlage
- 201: Kunststoffmaterial
- 202: Öffnungen
- 203: Filterschicht
- 2030: Kunststoffprofil

- 300: Decklage
- 301: Filtermatte
- 302: Decklage

## Patentansprüche

1. Filterelement (2) für eine Dunstabzugshaube, (1) das eine Filtermatte (301) mit zumindest einer Filterlage (20) aufweist, wobei die Filtermatte durch jeweils eine im wesentlichen flächenparallel zur Filtermatte und in Luftdurchströmrichtung vor und hinter der Filtermatte angeordnete Decklage (302) eingefasst ist, welche zumindest teilweise luftdurchlässig sind und aus einem Metall gebildet ist, wobei die Filterlage (20) aus einem Kunststoffmaterial (201) besteht und Öffnungen (202) aufweist, die durch den Zwischenraum zwischen Filterstegen in der jeweiligen Filterlage gebildet sind und deren Größe so fixiert ist, dass, die Öffnungen in ihrer Größe nicht veränderbar sind, da die Filterstege zwischen den Öffnungen nicht verschiebbar sind, wobei die zumindest eine Filterlage aus zumindest zwei Schichten (203) besteht, die Schichten jeweils aus Kunststoffprofilen (2030) ausgebildet sind die zumindest teilweise die Filterstege bilden, **dadurch gekennzeichnet, dass** die Kunststoffprofile (2030) in den einzelnen Schichten jeweils parallel zueinander angeordnet sind und innerhalb einer Filterlage (20) die Ausrichtung der Kunststoffprofile (2030) in der einen Schicht unterschiedlich zu der Ausrichtung der Kunststoffprofile der anderen Schicht ist dass durch die Anordnung der Kunststoffprofile der jeweiligen Schicht zu den Kunststoffprofilen der anderen Schichten die Öffnungen (202) in der Filterlage gebildet sind, wobei an den Kontaktstellen, an denen die Kunststoffprofile der beiden Schichten aneinander anliegen, diese miteinander verbunden sind und die Schichten (203) dadurch unlösbar miteinander verbunden sind, wobei die Versperrung die durch die Stege entsteht bei unter 50% der Fläche der Filterlage (20) liegt

2. Filterelement gemäß Anspruch 1, **dadurch gekennzeichnet, dass** das Filterelement (2) über einen umlaufenden Rahmen eingefasst ist.

3. Filterelement gemäß einem der Ansprüche 1 bis 2, **dadurch gekennzeichnet, dass** die Decklagen (302) zur mechanischen Stabilisierung der Filtermatte (301) ausgebildet sind

4. Filterelement gemäß Anspruch 3, **dadurch gekennzeichnet, dass** die Decklage (302) aus Streckmetall, Lochblech, Metallvlies oder Metallgewebe gebildet ist.

5. Filterelement, gemäß einem vorhergehenden Ansprüche, **dadurch gekennzeichnet, dass** die zumindest eine Filterlage (20) als ein flächiges Element ausgebildet ist

## Claims

1. Filter element (2) for an extractor hood (1) which has a filter mat (301) with at least one filter layer (20), wherein the filter mat is enclosed by a top layer (302) in each case arranged essentially parallel to the surface of the filter mat and, in the air throughflow direction, in front of and behind the filter mat, which top layer is at least partially air-permeable and made of a metal, wherein the filter layer (20) consists of a plastic material (201) and has apertures (202), which are formed by the intermediate space between filter webs in the respective filter layer and the size of which is fixed such that the apertures cannot be changed in terms of their size due to the fact that the filter webs cannot be moved between the apertures, wherein the at least one filter layer consists of at least two layers (203), the layers are embodied from plastic profiles (2030) in each case which at least partially form the filter webs, **characterised in that** the plastic profiles (2030) are arranged parallel to one another in each case in the individual layers and within a filter layer (20) the alignment of the plastic profiles (2030) in the one layer is different from the alignment of the plastic profiles of the other layer, that the apertures (202) are formed in the filter layer by the arrangement of the plastic profiles of the respective layer relative to the plastic profiles of the other layers, wherein at the contact points at which the plastic profiles of the two layers rest on one another, these are connected to one another and the layers (203) are thereby connected to one another in a non-detachable manner, wherein the obstruction caused by the webs is less than 50 % of the surface of the filter layer (20).

2. Filter element according to claim 1, **characterised in that** the filter element (2) is enclosed by a circumferential frame.

3. Filter element according to one of claims 1 to 2, **characterised in that** the top layers (302) are designed to mechanically stabilise the filter mat (301).

4. Filter element according to claim 3, **characterised in that** the top layer (302) is made of expanded metal, perforated sheet, metal felt or metal mesh.

5. Filter element according to one of the preceding claims, **characterised in that** the at least one filter layer (20) is designed as a planar element.

## Revendications

1. Élément filtrant (2) pour une hotte aspirante (1) lequel présente une natte filtrante (301) avec au moins une couche filtrante (20), la natte filtrante étant entourée à chaque fois par une couche couvrante (302) agencée pour l'essentiel parallèlement pour sa surface à la natte filtrante et, dans le sens du courant d'air, devant et derrière la natte filtrante, lesquelles laissent au moins partiellement passer l'air et sont constituées d'un métal, la couche filtrante (20) étant constituée d'une matière synthétique (201) et présentant des orifices (202), qui sont formés par l'espace intermédiaire entre des traverses de filtre dans la couche filtrante respective et dont les dimensions sont fixées de sorte que les orifices ne sont, dans leurs dimensions, pas modifiables, car les traverses de filtre ne peuvent être déplacées entre les orifices, la au moins une couche filtrante étant constituée d'au moins deux couches (203), les couches étant réalisées à chaque fois de profilés en matière synthétique (2030) qui forment au moins partiellement les traverses de filtre, **caractérisé en ce que** les profilés de matière synthétique (2030) sont agencés dans chacune des couches à chaque fois parallèlement l'un à l'autre et à l'intérieur d'une couche filtrante (20), l'orientation des profilés de matière synthétique (2030) dans une première couche est différente de l'orientation des profilés de matière synthétique de l'autre couche, **en ce que** par l'agencement des profilés de matière synthétique de la couche respective par rapport aux profilés de matière synthétique des autres couches, les orifices (202) sont formés dans la couche filtrante, dans lequel aux points de contacts, auxquels les profilés de matière synthétique des deux couches sont contigus, celles-ci sont reliées l'une avec l'autre et les couches (203) sont ainsi reliées les unes avec les autres d'une manière inséparable, l'obstruction due aux traverses se situant en dessous de 50% de la surface de la couche filtrante (20).

2. Élément filtrant selon la revendication 1, **caractérisé en ce que** l'élément filtrant (2) est entouré par un cadre périphérique.

3. Élément filtrant selon l'une des revendications 1 à 2, **caractérisé en ce que** les couches couvrantes (302) sont réalisées pour une stabilisation mécanique de la natte filtrante (301).

4. Élément filtrant selon la revendication 3, **caractérisé en ce que** la couche couvrante (302) est constituée de métal étiré, d'une tôle perforée, d'un non-tissé métallique ou d'un tissu métallique.

5. Élément filtrant selon l'une des revendications précédentes, **caractérisé en ce que** la au moins une couche filtrante (20) est réalisée en tant qu'élément plat.
